# EUROPEAN PATENT APPLICATION

(11) **EP 4 418 421 A1**
(43) Date of publication of application: **21.08.2024**
(21) Application number: 24157614.9
(22) Date of filing: 14.02.2024
(51) Int. Cl.: H01M 50/213, H01M 10/42, H01M 10/48, H01M 50/244, H01M 50/247, H01M 50/569

(54) **BATTERY PACK, AND POSITIONING MEMBER FOR THERMISTOR IN SAME**

(30) Priority: 14.02.2023 CN 202310115487
(71) Applicant: Techtronic Cordless GP, Anderson, SC 29621 (US)
(72) Inventor: LIU, Ya Bin, Dongguan City (CN); ZHAO, Jiang, Dongguan City (CN)
(74) Representative: Novagraaf Group

(57) **Abstract**

The present invention relates to a battery pack, and a positioning member for a thermistor in the battery pack, wherein the battery pack comprises at least one battery unit and a support, the support having at least one battery unit accommodating part for accommodating the battery unit, wherein the support is provided with a first opening, the first opening is connected to at least one battery unit accommodating part, the first opening and the battery unit of a connected portion form a thermistor accommodating part, and a thermistor arranged close to the battery unit is accommodated in the thermistor accommodating part, and wherein a positioning member is further provided in the thermistor accommodating part, the positioning member being used to limit the thermistor in the battery unit accommodating part.

## Description

### Technical Field

The present invention relates to the field of battery pack manufacture, in particular a battery pack, and a positioning member for a thermistor in the battery pack.

### Background Art

Battery packs are often used to supply power to mobile devices or portable apparatuses, and generally comprise multiple battery units, a support for mounting the multiple battery units, and a control element.

In addition, in the process of using a battery pack, a phenomenon may occur whereby one or more battery units in the battery pack experience an abnormal rise in temperature. In order to control the temperature of the battery pack promptly, a temperature sensor must be provided inside the battery pack to sense the real-time temperature of the battery pack or battery unit, so that the control unit can perform corresponding adjustment according to the sensed real-time temperature, e.g. cut off the connection between the battery pack and an electrical device, to prevent the temperature of the battery pack from rising further.

The temperature sensor comprises a thermistor, e.g. a thermistor with a negative temperature coefficient (NTC) or a positive temperature coefficient (PTC). To enable the thermistor to measure the temperature of the battery unit accurately, the thermistor is generally arranged at a position close to the battery unit, e.g. on a support of the battery unit, on an outer side of a housing of the battery unit, etc.

In the process of making certain battery packs, the thermistor is placed in a gap between two battery units, and a thermally conductive glue is injected; when the thermally conductive glue solidifies, the thermistor is fixed in place. However, when injected, the thermally conductive glue easily causes the thermistor to move, with the result that the thermistor is not in its correct position after solidification of the thermally conductive glue; this will affect the accuracy of temperature measurement.

### Summary of the Invention

An objective of the present invention is to provide a battery pack and a positioning member for a thermistor in the battery pack, whereby the position of the thermistor can be limited when thermally conductive glue solidifies, so that the thermistor is fixed in place at the correct position, thereby ensuring the accuracy of temperature measurement.

According to a first aspect of the present invention, a battery pack is provided, comprising at least one battery unit and a support, the support having at least one battery unit accommodating part for accommodating the battery unit, wherein the support is provided with a first opening, the first opening is connected to at least one battery unit accommodating part, the first opening and the battery unit of a connected portion form a thermistor accommodating part, and a thermistor arranged close to the battery unit is accommodated in the thermistor accommodating part, and wherein a positioning member is further provided in the thermistor accommodating part, the positioning member being used to limit the thermistor in the battery unit accommodating part.

Preferably, the first opening is connected to two adjacent said battery unit accommodating parts.

Preferably, the positioning member extends into a space between two adjacent said battery unit accommodating parts, such that the thermistor is disposed close to or in contact with at least one battery unit.

Preferably, the positioning member comprises: a body, having a first end and a second end opposite the first end; and a protruding part, extending from the second end in a direction away from the first end.

Preferably, the second end is further provided with an abutment part different from the protruding part, and the positioning member is arranged so that the abutment part abuts the support to limit a position of the protruding part.

Preferably, a tapered part is provided at an extremity side of the protruding part. A cross section of the tapered part decreases in size as the thermistor is approached. The tapered part determines the position of an extending extremity of the protruding part, and the limitation of thermistor position by the positioning member can be effectively adjusted by adjusting the configuration of the tapered part.

Preferably, a channel for accommodating a conducting wire of the thermistor is provided between the extending extremity of the protruding part and the first end of the body. The channel can allow the conducting wire to pass through, so as to conveniently establish an electrical connection between the thermistor and a control unit for example.

Preferably, the thermistor accommodating part is filled with thermally conductive glue; more preferably, the thermally conductive glue is present between the thermistor accommodating part and the protruding part. This can prevent direct contact between the protruding part and the thermistor, thereby preventing the transmission of forces and shocks sustained by the protruding part to the fragile thermistor, and preventing consequent damage to the thermistor, while the thermally conductive glue can also seal a peripheral gap.

Preferably, the battery pack further comprises a printed circuit board, the printed circuit board being fixed to the support, and located on the same side of the support as the thermistor accommodating part. This can ensure unhindered electrical connection between the thermistor and the printed circuit board.

Preferably, a second opening is provided in the printed circuit board, the first opening and the second opening being aligned with each other.

Preferably, the first opening comprises an inclined guide wall part, to guide the positioning member into the thermistor accommodating part.

Preferably, the guide wall part is provided with a notch, to pass a conducting wire of the thermistor through, so as to conveniently establish an electrical connection between the thermistor and the printed circuit board for example.

Preferably, the battery pack further comprises at least one housing portion, the at least one housing portion being provided with a rib capable of passing through the second opening and the first opening to abut the first end of the positioning member. Thus, a step of waiting for the thermally conductive glue to solidify can be effectively omitted, and a housing installation step can be performed directly, thus speeding up the overall assembly process.

Preferably, a cushioning pad is provided between the first end of the positioning member and the rib, to reduce the effect of housing shocks on the thermistor.

Preferably, the protruding part is elastic, so the protruding part can press the thermistor against the battery unit, without damaging the thermistor.

Preferably, the protruding part causes the thermistor to abut the battery unit.

According to a second aspect of the present invention, a positioning member for a thermistor in the battery pack of the first aspect of the present invention is provided, the positioning member being able to limit the thermistor to be close to or in contact with the battery unit, and the positioning member comprising: a body, having a first end and a second end opposite the first end; and a protruding part, extending from the second end in a direction away from the first end, so as to limit a position of the thermistor, wherein the second end is further provided with an abutment part different from the protruding part, to abut the support of the battery pack.

Preferably, a tapered part is provided at an extremity side of the protruding part. A cross section of the tapered part decreases in size as the thermistor is approached. The tapered part determines the position of an extending extremity of the protruding part, and the limitation of thermistor position by the positioning member can be effectively adjusted by adjusting the configuration of the tapered part.

Preferably, a channel is provided between an extending extremity of the protruding part and the first end of the body. The channel can allow the conducting wire to pass through, so as to conveniently establish an electrical connection between the thermistor and a control unit for example.

In addition to enabling the thermistor to be fixed in place at the correct position, thereby ensuring the accuracy of temperature measurement, the battery pack and member according to the present invention may also have the following advantages:
1. The configuration of the positioning member can be adjusted to adapt to thermistors with different part numbers, and different use scenarios;
2. The fragile thermistor can be effectively protected from damage due to squeezing, shocks, etc.;
3. An electrical connection between the thermistor and the printed circuit board (control unit) can be established without hindrance; and
4. The overall assembly process can be speeded up.

### Brief Description of the Drawings

Preferred embodiments of the present invention are described in more detail below with reference to the drawings. In the drawings, identical reference labels denote identical components. Those skilled in the art should understand that the drawings are intended to illustrate preferred embodiments of the present invention schematically, and have no limiting effect on the scope of the present invention, and the various components in the drawings are not drawn to scale. In the drawings:
Fig. 1 shows a schematic three-dimensional drawing of a battery pack according to an embodiment of the present invention;
Fig. 2 shows a sectional view of the battery pack in Fig. 1, taken along line A-A;
Fig. 3 shows a three-dimensional drawing of the support of the battery pack in Fig. 1;
Fig. 4 shows a partial cutaway three-dimensional drawing of the structure of the support in Fig. 3 close to the thermistor, and is intended to show how the positioning member according to the present invention is positioned relative to the surrounding structure;
Fig. 5 shows a three-dimensional drawing of the positioning member according to the present invention; and
Fig. 6 shows a three-dimensional drawing of the positioning member according to the present invention, viewed from another direction.

### Detailed Description of the Invention

Specific embodiments of the present invention are now described in detail by referring to the drawings. The embodiments described herein are merely preferred embodiments of the present invention. Based on these preferred embodiments, those skilled in the art will be able to think of other ways in which the present invention could be implemented, all of which likewise fall within the scope of the present invention.

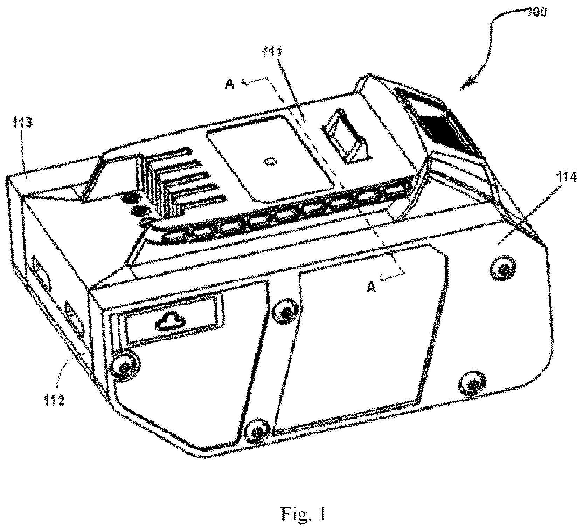

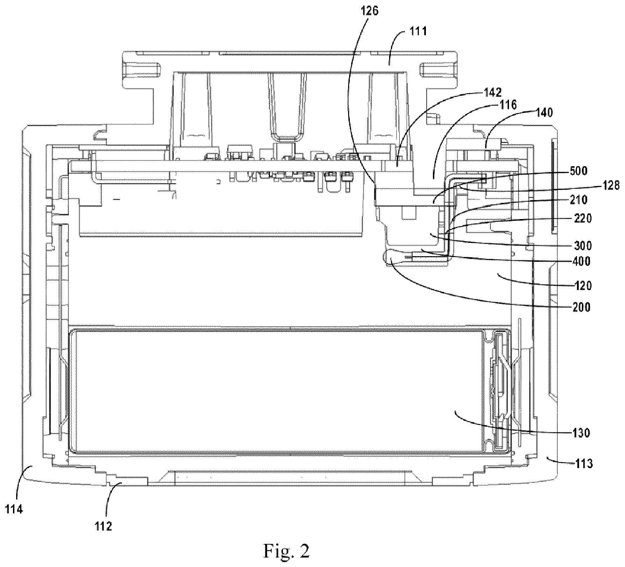

Figs. 1 and 2 show a battery pack 100 according to the present invention, comprising a housing and, located within the housing, a support 120 and at least one battery unit 130, wherein the housing is formed by an upper housing portion 111, a lower housing portion 112, a front housing portion 113 and a rear housing portion 114. The upper housing portion 111, lower housing portion 112, front housing portion 113 and rear housing portion 114 are for example fixed to the support 120 separately by means of screws or mounting pins, thereby forming the housing of the battery pack 100.

In other embodiments, the housing may be formed of one, two, three or more housing portions.

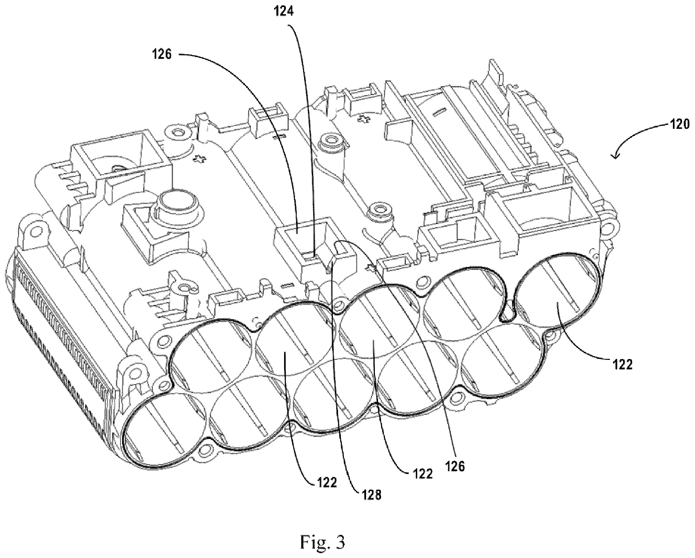

Fig. 3 shows the support 120 in the housing of the battery pack 100; the support 120 has multiple battery unit accommodating parts 122, the battery unit accommodating parts 122 each being used to accommodate the at least one battery unit 130.

The support 120 is provided with a first opening 124, the first opening 124 being connected to at least one, preferably two adjacent battery unit accommodating parts 122. A thermistor accommodating part is formed by the first opening 124 and a battery unit 130 arranged in the battery unit accommodating part 122 connected to the first opening 124, in particular a wall part of said battery unit 130 at a connected portion, and a thermistor 200 is accommodated in the thermistor accommodating part. Thus, the thermistor 200 and the battery unit 130 will not be separated by a wall of the support, so the thermistor 200 can be arranged as close as possible to, or even in contact with, the battery unit 130. The thermistor accommodating part may be disposed between two adjacent battery unit accommodating parts 122.

Returning to Fig. 2, the battery pack 100 may further comprise a printed circuit board 140, on which are arranged electronic components to serve as a control unit for controlling the operation of the battery pack 100. The printed circuit board 140 is fixed above the support 120, and located on the same side of the support 120 as the thermistor accommodating part, thereby facilitating the establishment of an electrical connection between the thermistor 200 and the printed circuit board 140, e.g. electrical connection via conducting wires 210, 220 as shown in Fig. 2.

The printed circuit board 140 may further be provided with a second opening 142, the second opening 142 of the printed circuit board 140 being substantially aligned with the first opening 124 of the support 120, to facilitate insertion of the thermistor 200 into the thermistor accommodating part through the second opening 142 and the first opening 124.

The thermistor accommodating part is also filled with thermally conductive glue 400, and a positioning member 300 is provided in the thermistor accommodating part. The positioning member 300 is used to limit the position of the thermistor 200, in particular to limit the thermistor 200 in the battery unit accommodating part, so as to prevent or correct shifting of the thermistor 200 in the period of time from filling to solidification of the thermally conductive glue 400, in particular shifting away from the battery unit 130. In particular, the positioning member 300 and the thermistor 200 are close to each other or have a slight gap therebetween, such that the thermistor 200 can only shift within a limited shifting space in the thermistor accommodating part and finally be positioned in this shifting space, thereby ensuring that the thermistor 200 is positioned relatively accurately, and further ensuring accuracy of temperature measurement.

Furthermore, preferably, since there is a certain gap between the positioning member 300 and the thermistor 200, this gap is filled with thermally conductive glue 400, thereby avoiding direct contact between the positioning member 300 and the thermistor 200, and preventing pressure on the positioning member 300 from damaging the fragile thermistor 200.

Referring to Fig. 3, in order to guide the positioning member 300 into the thermistor accommodating part, the first opening 124 may comprise an inclined guide wall part 126. More preferably, in order to facilitate the establishment of the electrical connection between the thermistor 200 and the printed circuit board 140, a notch 128 may also be provided in the guide wall part 126, the notch 128 allowing the conducting wires 210, 220 of the thermistor 200 to pass through.

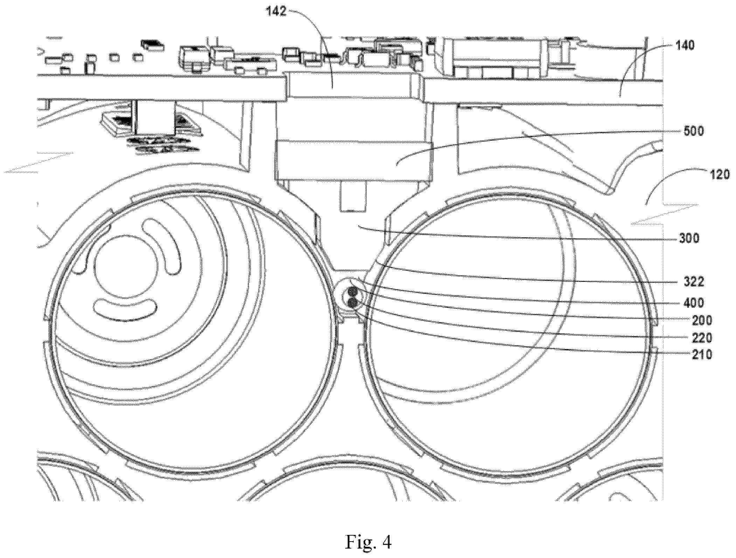

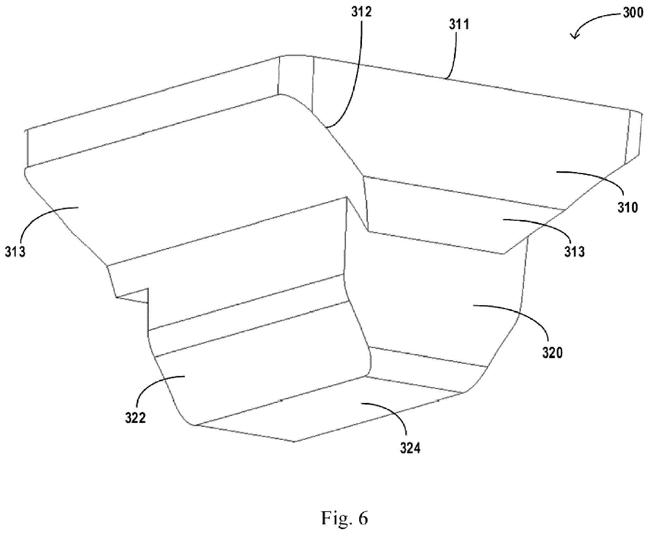

Referring to Figs. 4 - 6, the configuration of the positioning member 300 can be seen more clearly.

The positioning member 300 comprises a body 310 and a protruding part 320, wherein the body 310 has a substantially flat first end 311 and a second end 312 opposite the first end 311; the protruding part 320 extends from the second end 312 in a direction away from the first end 311. The second end 312 is further provided with an abutment part 313; the abutment part 313 is different from the protruding part 320, and disposed at an outer side of the protruding part 320, so as to abut the support 120 of the battery pack 100. When the abutment part 313 abuts the support 120, an extending extremity 324 of the protruding part 320 defines a limited shifting space in the thermistor accommodating part, thereby limiting the shifting of the thermistor 200 and the final position thereof. Optionally, the protruding part 320 causes the thermistor 200 to abut the battery unit 130.

Preferably, a tapered part 322 is provided at an extremity side of the protruding part 320 close to the extending extremity 324. In particular, in the case where the thermistor accommodating part is disposed between two adjacent battery unit accommodating parts 122, the tapered part 322 conveniently enters a gap between the two adjacent battery unit accommodating parts 122, and is closer to the thermistor 200, as shown in Figs. 4 - 6; this also allows the thermistor to be disposed closer to the battery unit, effectively improving the quality of temperature measurement. Thus, the extending extremity 324 of the protruding part 320 can be as close to the thermistor 200 as possible, and the extent of the shifting space defined by the extending extremity 324 in the thermistor accommodating part is further reduced, thus making the positioning of the thermistor 200 more accurate.

Furthermore, in a scenario in which the configuration of the support 120 is generally fixed and invariable, it is possible to adjust the position of the extending extremity 324 of the protruding part 320, and thereby adjust the extent of the shifting space, by adjusting the configuration of the positioning member 300, in particular the configuration of the tapered part 322, in order to adapt to thermistors 200 with different part numbers, and different use scenarios.

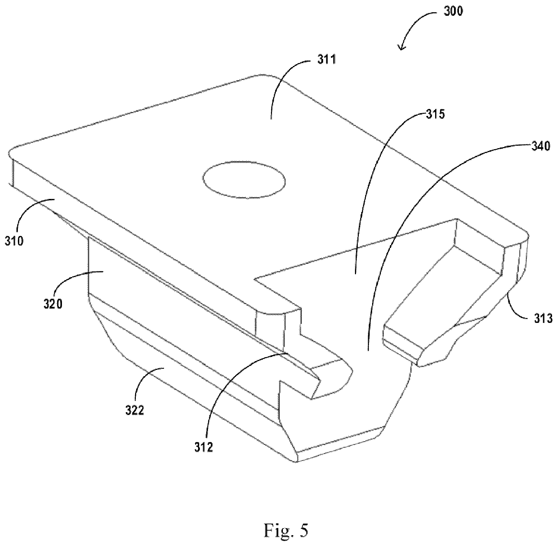

Preferably, a channel 340 may be provided between the extending extremity 324 of the protruding part 320 and the first end 311 of the body 310, to allow the conducting wires 210 and 220 of the thermistor 200 to be electrically connected to the printed circuit board 140 via the channel 340. For example, the channel 340 may be disposed on a front end 315 of the positioning member 300, as shown in Fig. 5.

In an embodiment, the protruding part 320 may be formed to be elastic, in which case the protruding part 320 can press the thermistor 200 against the battery unit 130, without damaging the thermistor 200.

Again returning to Fig. 2, preferably, a rib 116 may be provided at an inner side of the housing, for example the upper housing portion 111 here; when the upper housing portion 111, lower housing portion 112, front housing portion 113 and rear housing portion 114 are fitted together to form the housing, so as to accommodate the battery unit 130, the support 120 and the printed circuit board 140, the rib 116 successively passes through the second opening 142 in the printed circuit board 140 and the first opening 124 in the support 120, so as to abut the first end 311 of the positioning member 300, such that the positioning member 300 is pressed against the support 120, facilitating the positioning of the thermistor 200. Thus, after filling with the thermally conductive glue 400, a step of waiting for the thermally conductive glue 400 to solidify can be omitted, and a housing installation step can be performed directly, thus speeding up the overall assembly process.

More preferably, a cushioning pad 500 made of foam material for example may be provided between the rib 116 and the first end 311, i.e. above the first end 311, to reduce the effect of housing shocks on the thermistor 200.

A method of fixing the thermistor 200 in the battery pack 100 according to the present invention is described below. The method comprises: placing the battery unit 130 in the battery unit accommodating part 122; placing the thermistor 200 in the thermistor accommodating part via the second opening 142 and the first opening 124; injecting thermally conductive glue 400 into the thermistor accommodating part via the second opening 142 and the first opening 124; placing the positioning member 300 in the thermistor accommodating part, such that the protruding part 320 of the positioning member 300 faces towards the thermistor 200; pressing the first end 311 of the positioning member 300, so that the abutment part 313 of the second end 312 abuts the support 120, and the thermistor 200 is pushed close to the battery unit 130 and disposed close to the battery unit 130 by means of the positioning member 300, such that the protruding part 320 of the positioning member 300, in particular the extending extremity 324 of the protruding part 320, can limit the position of the thermistor 200. Thereafter, the pressure on the positioning member 300 is maintained, until the thermally conductive glue 400 solidifies.

In order to speed up the overall assembly process, at least one housing portion, specifically the upper housing portion 111 may also be mounted to the support 120, for example, after placing the positioning member 300 in the thermistor accommodating part, such that the rib 116 disposed at the inner side of the upper housing portion 111 presses the first end 311 of the positioning member 300.

In order to reduce the effect of housing shocks on the thermistor 200, the cushioning pad 500 may also be arranged on the first end 311 of the positioning member 300, for example, before mounting the upper housing portion 111 on the support 120.

The above description of various embodiments of the present invention is provided for illustrative purposes to a person skilled in the art. It is not intended that the present invention be exclusive or limited to a single disclosed embodiment. As mentioned above, those skilled in the art will understand various alternatives and variations of the present invention. Thus, although some alternative embodiments have been specifically described, those skilled in the art will understand, or develop with relative ease, other embodiments. The present invention is intended to include all alternatives, modifications and variants of the present invention described here, as well as other embodiments which fall within the spirit and scope of the present invention described above.

### Key to the drawings:

- 100: Battery pack
- 111: Upper housing portion
- 112: Lower housing portion
- 113: Front housing portion
- 114: Rear housing portion
- 116: Rib
- 120: Support
- 122: Battery unit accommodating part
- 124: First opening
- 126: Guide wall part
- 128: Notch
- 130: Battery unit
- 140: Printed circuit board
- 142: Second opening
- 200: Thermistor
- 210: Conducting wire
- 220: Conducting wire
- 300: Positioning member
- 310: Body
- 311: First end
- 312: Second end
- 313: Abutment part
- 315: Front end
- 320: Protruding part
- 322: Tapered part
- 324: Extending extremity
- 400: Thermally conductive glue
- 500: Cushioning pad

## Claims

1. Battery pack, comprising:
at least one battery unit; and
a support, having at least one battery unit accommodating part for accommodating the battery unit,
wherein the support is provided with a first opening, the first opening is connected to at least one battery unit accommodating part, the first opening and the battery unit of a connected portion form a thermistor accommodating part, and a thermistor arranged close to the battery unit is accommodated in the thermistor accommodating part, **characterized in that** a positioning member is further provided in the thermistor accommodating part, the positioning member being used to limit the thermistor in the battery unit accommodating part.

2. Battery pack according to Claim 1, **characterized in that** the first opening is connected to two adjacent said battery unit accommodating parts.

3. Battery pack according to Claim 1 or 2, **characterized in that** the positioning member extends into a space between two adjacent said battery unit accommodating parts, such that the thermistor is disposed close to or in contact with at least one battery unit, and preferably, the positioning member comprises:
a body, having a first end and a second end opposite the first end; and
a protruding part, extending from the second end in a direction away from the first end.

4. Battery pack according to Claim 3, **characterized in that** the second end is further provided with an abutment part different from the protruding part, and the positioning member is arranged so that the abutment part abuts the support to limit a position of the protruding part, and preferably, a tapered part is provided at an extremity side of the protruding part.

5. Battery pack according to Claim 4, **characterized in that** a channel for accommodating a conducting wire of the thermistor is provided between an extending extremity of the protruding part and the first end of the body.

6. Battery pack according to Claim 4, **characterized in that** the thermistor accommodating part is filled with thermally conductive glue, and preferably, the thermally conductive glue is present between the thermistor accommodating part and the protruding part.

7. Battery pack according to Claim 4, **characterized in that** the battery pack further comprises a printed circuit board, the printed circuit board being fixed to the support, and located on the same side of the support as the thermistor accommodating part, and preferably, a second opening is provided in the printed circuit board, the first opening and the second opening being aligned with each other.

8. Battery pack according to Claim 7, **characterized in that** the first opening comprises an inclined guide wall part, to guide the positioning member into the thermistor accommodating part, and preferably, the guide wall part is provided with a notch, to pass a conducting wire of the thermistor through.

9. Battery pack according to Claim 7, **characterized in that** the battery pack further comprises at least one housing portion, the at least one housing portion being provided with a rib capable of passing through the second opening and the first opening to abut the first end of the positioning member.

10. Battery pack according to Claim 9, **characterized in that** a cushioning pad is provided between the first end of the positioning member and the rib.

11. Battery pack according to Claim 3, **characterized in that** the protruding part is elastic.

12. Battery pack according to Claim 11, **characterized in that** the protruding part causes the thermistor to abut the battery unit.

13. Positioning member for a thermistor in the battery pack according to Claim 1, **characterized in that** the positioning member is used to limit the thermistor to be close to or in contact with the battery unit, the positioning member comprising:
a body, having a first end and a second end opposite the first end; and
a protruding part, extending from the second end in a direction away from the first end, so as to limit a position of the thermistor,
wherein the second end is further provided with an abutment part different from the protruding part, to abut the support of the battery pack.

14. Positioning member according to Claim 13, **characterized in that** a tapered part is provided at an extremity side of the protruding part.

15. Positioning member according to Claim 14, **characterized in that** a channel is provided between an extending extremity of the protruding part and the first end of the body.
